# EUROPEAN PATENT SPECIFICATION

(11) **EP 1 896 783 B1**
(45) Date of publication and mention of the grant of the patent: **02.05.2012**
(21) Application number: 05783495.4
(22) Date of filing: 14.09.2005
(51) Int. Cl.: F24J 2/24, F24J 2/34, F24J 2/44

(54) **SOLAR COLLECTOR**
SONNENKOLLEKTOR
CAPTEUR SOLAIRE

(30) Priority: 30.06.2005 PT 10330005
(43) Date of publication of application: 12.03.2008
(73) Proprietor: Silva Simões, Joaquim Policarpo, CEP-2665-553 Venda do Pinheiro (PT); MACHADO SIMÕES, Nuno Gonçalo, 1500-627 Lisboa (PT)
(72) Inventor: Silva Simões, Joaquim Policarpo, CEP-2665-553 Venda do Pinheiro (PT)
(74) Representative: Pereira da Cruz, Jorge Afonso
(86) International application number: PCT/PT2005/000014
(87) International publication number: WO 2007/004907

(56) References cited:
- WO-A-2004/090439
- DE-A1- 4 429 838
- JP-A- 57 077 852
- JP-A- 58 138 949
- JP-A- 58 213 154
- JP-A- 60 011 067
- JP-A- 62 125 261
- US-A- 4 205 660
- US-A- 4 898 153
- PATENT ABSTRACTS OF JAPAN vol. 011, no. 082 (M-571), 12 March 1987 (1987-03-12) & JP 61 237969 A (SANYO ELECTRIC CO LTD), 23 October 1986 (1986-10-23)
- PATENT ABSTRACTS OF JAPAN vol. 008, no. 012 (M-269), 19 January 1984 (1984-01-19) -& JP 58 173341 A (MATSUSHITA REIKI KK; others: 01), 12 October 1983 (1983-10-12)

## Description

### 1. Historical framing

Since some year ago, I began to become interested by the use of solar energy to heat domestic water.

So I started to sell same Portuguese solar heater systems that were available in the Portuguese market.

The low performance of those systems, make ours clients to began disappointed, because electric energy (supplementary energy for this systems) consume was high.

So tried to find outland solutions that could be more efficient.

All that work was inutile because those systems had almost the same performance.

Since then, I really would like to do something to develop those kinds of systems, to my clients became satisfied.

After thinking of the problem, arise some ideas.

The results were amazing.

The high performance is the result of association between panels, as well as a utilization of a high stratification reservoir (which the cold water that enter does not mix with the warm water that goes to consume, and just after the first 150 litres are sufficiently warm is when it start to heat the others 150 litres).

So, we obtain a much better performance that implies water much more warm for the same solar radiation.

From now on, I'm gone explain how does the others solar heater systems works, and then I will confront with my system.

### 2. The way that the others solar heater systems work

The solar heaters Kits to get domestic water warm are composed by a primary circuit, which has fifteen litres on an average.

This circuit works just with the gravity force and by density water alteration, because of temperature variation.

So, in case of solar radiation, the water in the primary circuit is constantly doing the course from the panels to reservoir (where happens the heat transference to the consume water) and then from the reservoir to the panels.

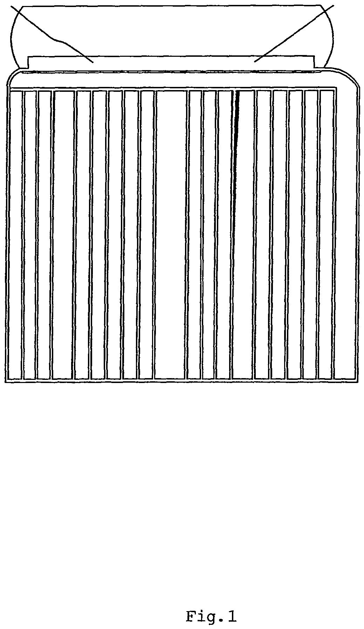

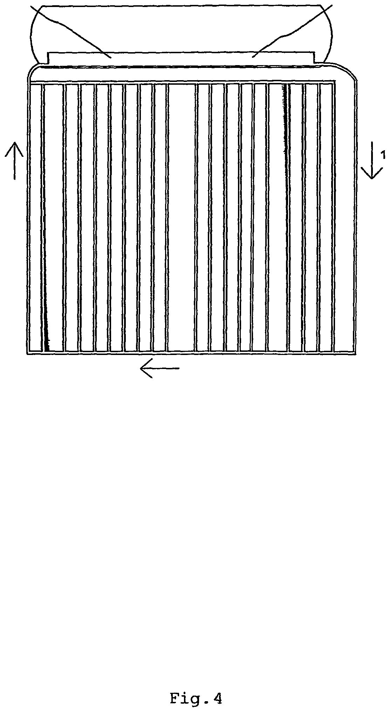

In the others Kits (See fig.1), the water course in the primary circuit is:
a) The water less warm that had just gone out of reservoir goes down by an exterior tube, out of the heater zone (Fig. 4, number 1) and by that fact causes same performance wastes.
b) When the water comes into the panels, and supposing that each panel has two metros height and one width, will go four metros long inside the heater zone (See fig.4).
   So, whichever is the watercourse inside the tubes, it will go through two metros outside the heater zone and four metros inside the two panels.
c) The water when returns to reservoir, transfer all the heat for just one reservoir witch means that in case of low solar radiation days, the temperature water raise in all reservoir is not enough to any kind of warm water use.
d) By the fact of the others solar heater Kits has just one reservoir, the consume cold water that enter will directly mix with the warm water that goes out, that is a very unfavourable mix.

### 3. The way that our solar heater system work

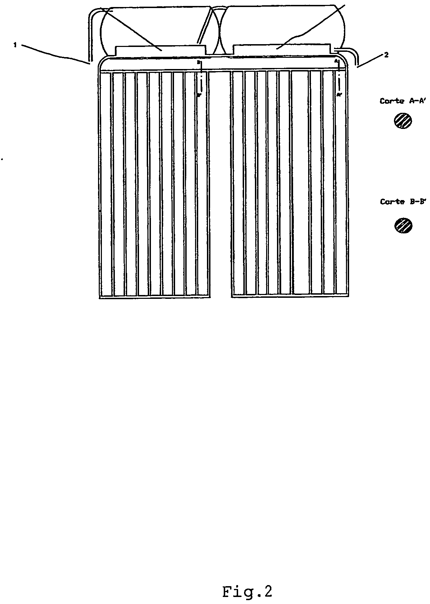

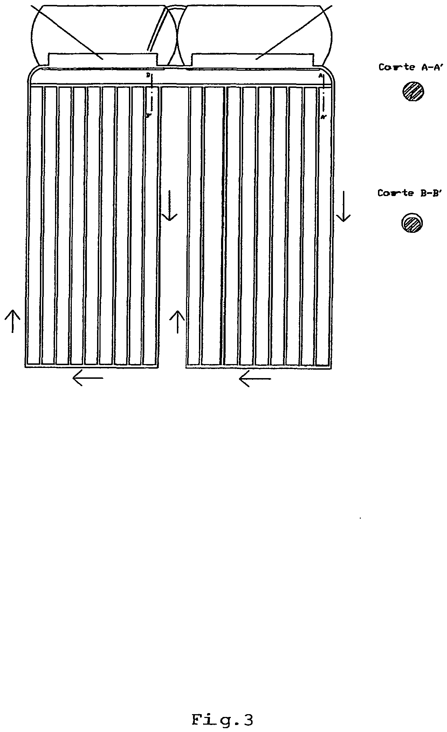

In our system the primary circuit course is completely different (See fig.3 to understand)
a) The main question is to know how possible is the water go down, after gone out of the reservoir, if it is in the heater zone and so wants to go up.
   That is possible because of the stopper (See fig.2, A-A' cut).
   So, in each panel of 10 tubes, in nine tubes the water power that is imposed when wants to go up is enough to happens a sucking in the other tube, where the water even warming up is going down.
b) Because there are no connections between panels in the inferior side (See fig.2), the water is forced to enter in the second panel in the superior side.
c) So the course of this primary circuit is 10 metros long inside the heater zone, really bigger than the four metros of the others systems (See fig.3) .
   And by that fact the water in our primary circuit is much more warm.
d) The reservoir has two permuting in distinct reservoirs (See fig. 2) .

So the water that comes from the panels and enter in first permuting will start warming up the consume water in the left reservoir, and so when the water enters into the second permuting (that is in the right reservoir), it's already with a temperature much inferior (minim consume water temperature of the left reservoir).

So, for example, if the water arrives at the first permuting with 80° degrees temperature, may cause a consume water temperature of 50° degrees in the superior side of the reservoir and 30 degrees in the inferior side (for that happens the heat transfer was already too much), and then the primary circuit water that arrives to the other permuting is no much more then 30 degrees and so will not warm up significantly the consume water of the right reservoir.

As long as the consume water temperature of the left reservoir grows, more will be the heat transfer for the second reservoir.

So, if we already have 70° degrees temperature in the superior side of the first reservoir and 50° degrees temperature in the inferior side, the primary circuit water that arrives to the second permuting is already with 50° degrees and continues warming up the consume water of the second reservoir.
e) The cold consume water that enters in the right reservoir (the reservoir that has less warm water) will not directly mix with the hot water that goes to consume (goes out from the left reservoir) (See fig.2), and by that fact doesn't provoke big temperatures breaks between the water that goes to consume and the cold consume water that enters.
f) The consume water that goes from the right reservoir to the left reservoir is still forced to go to the bottom of left reservoir with the same objective, that is retard how far is possible the "contact" between the consume water that enters and the one that goes out.

So, for example, if the consume water enters with 15° degrees temperature, it might grow up for 35° in the first reservoir and then in the second reservoir can grows from 35° to 50° degrees that implies there are not a thermal "shock" between the consume water that enter and the one that goes out.

## Claims

1. Solar heater system for domestic waters **characterised by** a primary circuit with a water course wherein water that is less warm travels downwards, water that exits a reservoir, into a heating zone inside panels, which is possible because of a first stopper (A-A') and wherein the water, despite being heated inside the panels, can travel downwards because in other tubes, on the left of the stopper, the water that wants to travel upwards will have sufficient power for there to be suction in another tube, where the water, even though it is being heated, will travel downwards, and wherein subsequent to the water course in the first panel, the water is forced to go through other panels in the upper part, as there is no connection between the panels in the lower part, and wherein also by virtue of a second stopper (B-B') the water will go down again , so that in the case of the water course in the panels of the invention, association is much longer than in the case of the existing panels.

2. Solar heater system for domestic waters as claim 1, **characterised in that** the primary circuit of the reservoir of the system is carried out in independent reservoirs and in conjunction with the course of the water for consumption a high stratification reservoir is made, so that the cold water for consumption that enters the right-hand reservoir (2) does not contact directly with the hot water to be consumed (1), and so that during the water course the water for consumption is progressively heated up in the right-hand reservoir and when it passes through to the left-hand reservoir it is hotter and is also forced to go to the bottom of the left-hand reservoir for the same reason, i.e. to prevent as far as possible contact between waters with very different temperatures, which provides better energy rationalisation, meaning that on days of low solar radiation, the water in the primary circuit that reaches the left-hand reservoir is the main one responsible for heat transfer, so that in most cases half of the water (left-hand reservoir) is hot enough to use, which is much better than all of the water being unacceptable for hot water consumption.

## Patentansprüche

1. Solarheizung system für Hauswassern **gekennzeichnet durch** eine Primärkreis mit eine wasserlauf, wo das wasser die kälter ist, reisst nach unten, wasser, die ausfahrt eine reservoir nach eine heizzone zwischen Platten, die möglich sind wegen eine erster stopper (A-A') und wo das wasser , obwohl es zwischen die Platten erhitzt ist, kann nach unten fahren, weil in anderen Rohren, auf der linken Seite des Stopper, das Wasser, das nach oben fahren will ausreichende Leistung erhaltet um in ein anderes Rohren gesaugt werden, wo das Wasser, auch wenn es erwärmt wird, wird nach unten gefährt, und wobei nach dem Wasserlauf in der ersten Platte, wird das Wasser gezwungen **durch** andere Platten in dem oberen Teil, da es eine Verbindung zwischen den Platten im unteren Teil gibt, und wobei auch aufgrund einer zweite stopper (B-B') wird das Wasser wieder sinkt, so dass im Falle des wasserlaufs in den Platten nach der Erfindung, die Verbindung dauert viel länger als bei der bisherige Platten.

2. Solarheizung system für Hauswassern nach Anspruch 1 **dadurch gekennzeichnet, dass** der Primärkreis des Reservoirs des Systems ist in den unabhängigen Reservoirs durchgeführt und in Verbindung mit dem Wasserlauf zum Verbrauch, eine hohe Schichtung Reservoir ist erstellt, damit die kalte Wasser zum Verbrauch, die in dem rechten Reservoir (2) einfährt nicht in direktem Kontakt mit dem heißen Wasser zum Verbrauch (1) kommt, und damit während der Wasserlauf, das Wasser zum Verbrauch fortschreitend in der rechten Reservoir erwärmt ist und wenn es durch den linken Reservoir fährt, es heißer ist und dazu gezwungen nach den Boden des linken Reservoirs gehen, aus dem gleichen Grund, dh, um so weit wie möglich den Kontakt zwischen Wassern mit sehr unterschiedlichen Temperaturen zu verhindern, und das bietet bessere Energie-Rationalisierung, was bedeutet, dass an Tagen mit geringer Sonneneinstrahlung, das Wasser im Primärkreislauf, der die linke Reservoir erreicht, der hauptverantwortliche für die Wärmeübertragung ist, so dass in den meisten Fällen die Hälfte des Wassers (linke Reservoir) ist heiß genug, um zu verwenden, was viel besser als das gesamte Wasser inakzeptabel für Warmwasserverbrauch ist.

## Revendications

1. Système de chauffage solaire pour eaux domestiques **caractérisé par** un circuit primaire avec un cours d'eau dans lequel l'eau moins chaude descend, l'eau qui sort d'un réservoir, vers une zone de chauffage à l'intérieur de panneaux, ce qui est possible dû à un premier bouchon (A-A') et dans lequel l'eau, bien qu'elle soit chauffée dans les panneaux, peut descendre parce que dans les autres tubes, à la gauche du bouchon, l'eau qui veut monter aura suffisamment de puissance pour qu'il existe de la succion dans un autre tube, où l'eau descendra, quoiqu'elle soit en train d'être chauffée, et dans lequel, après le cours d'eau dans le premier panneau, l'eau est forcée à traverser d'autres panneaux dans la partie supérieure, car il n'existe pas de raccordement entre les panneaux dans la partie inférieure, et dans lequel, aussi dû à un deuxième bouchon (B-B'), l'eau descendra de nouveau, de manière que dans le cas du cours d'eau dans les panneaux de l'invention, il existe une association beaucoup plus longue que dans le cas des panneaux existants.

2. Système de chauffage solaire pour eaux domestiques selon la revendication 1, **caractérisé en ce que** le circuit primaire du réservoir du système est effectué dans des réservoirs indépendants et conjointement avec le cours d'eau pour consommation un réservoir fortement stratifié est fait, de façon à ce que l'eau froide pour consommation qui entre dans le réservoir droit (2) n'entre pas en contact direct avec l'eau chaude à être consommée (1), et pour que pendant le cours d'eau, l'eau pour consommation soit chauffée progressivement dans le réservoir droit et que quand elle passe au réservoir gauche elle soit plus chaude et soit aussi forcée à entrer dans la partie inférieure du réservoir gauche pour la même raison, c'est-à-dire, pour empêcher dans la mesure possible le contact entre les eaux avec des températures très différentes, conférant ainsi une meilleure rationalisation énergétique, ce qui veut dire que les jours de faible radiation solaire, l'eau dans le circuit primaire qui arrive au réservoir gauche est l'eau principalement responsable du transfert de chaleur, de sorte que dans la plupart des cas la moitié de l'eau (réservoir gauche) est suffisamment chaude pour être utilisée, ce qui est beaucoup mieux qu'une situation où toute l'eau est inacceptable pour consommation comme eau chaude.
